# EUROPÄISCHE PATENTSCHRIFT

(11) **EP 4 397 510 B1**
(45) Veröffentlichungstag und Bekanntmachung des Hinweises auf die Patenterteilung: **30.07.2025**
(21) Anmeldenummer: 23217911.9
(22) Anmeldetag: 19.12.2023
(51) Int. Cl.: B60C 23/04

(54) **VERFAHREN ZUM ZUORDNEN VON REIFENDRUCKÜBERWACHUNGSEINHEITEN ZU DEN RADPOSITIONEN EINES FAHRZEUGS**
METHOD FOR ASSIGNING TYRE PRESSURE MONITORING UNITS TO THE WHEEL POSITIONS OF A VEHICLE
PROCÉDÉ D'ATTRIBUTION D'UNITÉS DE SURVEILLANCE DE PRESSION DE PNEU À DES POSITIONS DE ROUES D'UN VÉHICULE

(30) Priorität: 05.01.2023 DE 102023100228
(43) Veröffentlichungstag der Anmeldung: 10.07.2024
(73) Patentinhaber: Huf Baolong Electronics Bretten GmbH, 75015 Bretten (DE)
(72) Erfinder: Kessler, Ralf, 76327 Pfinztal (DE); Vögeli, Patrick, 76356 Weingarten (DE); Wagner, Markus, 75038 Flehingen (DE)
(74) Vertreter: Twelmeier Mommer & Partner

(56) Entgegenhaltungen:
- DE-A1- 102008 045 867
- DE-A1- 102018 218 422
- FR-A1- 3 075 550
- JP-A- 2012 144 223
- US-A1- 2009 066 498
- US-A1- 2015 054 640
- US-B2- 9 481 216

## Beschreibung

Die Erfindung betrifft ein Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist, und geht dabei von einem Zuordnungsverfahren mit den im Oberbegriff des Anspruchs 1 angegebenen Merkmalen aus, wie es beispielsweise aus DE 10 2008 045 867 A1 bekannt ist. Weitere Reifendrucküberwachungssysteme sind aus DE102018218422 A1, US2015/054640 A1, US2009/066498 A1, JP2012144223 A, FR3075550 A1 und US9481216 B2 bekannt.

In den Luftreifen eines Fahrzeugs angeordnete Reifendrucküberwachungseinheiten senden Druckdaten jeweils zusammen mit einer charakteristischen Kennung aus, die es einer ortsfest am Fahrzeug angeordneten Zentraleinheit ermöglicht, die Reifendrucküberwachungseinheiten und damit die von ihnen übermittelten Druckdaten den einzelnen Rädern des Fahrzeugs zuzuordnen. Da die Reifen eines Fahrzeugs und damit die in ihnen angeordneten Reifendrucküberwachungseinheiten vertauscht oder ausgewechselt werden können, muss die Zentraleinheit nach jedem Fahrtbeginn erneut eine Zuordnung der charakteristischen Kennungen zu den jeweiligen Radpositionen vornehmen. Diese Zuordnung kann mittels einer statistischen Auswertung des Empfangspegels vorgenommen werden. Signale von Reifendrucküberwachungseinheiten in Fahrzeugreifen, die näher an einem Empfänger der Auswerteeinheit angeordnet sind, werden nämlich im zeitlichen Mittel mit einem größeren Empfangspegel empfangen als Signale von Reifendrucküberwachungseinheiten in weiter entfernten Fahrzeugreifen.

Damit die Zentraleinheit Reifendrucküberwachungseinheiten zuverlässig einer Radposition zuordnen kann, muss bei herkömmlichen Reifendrucküberwachungssystemen unter Umständen eine sehr hohe Anzahl von Sendungen empfangen werden, bevor eine aussagekräftige statistische Auswertung möglich ist.

Aufgabe der Erfindung ist es deshalb, ein Weg aufzuzeigen, wie bei einem System zur Überwachung des Reifendrucks in Fahrzeugen die Anzahl der Sendungen reduziert werden kann, die für eine Zuordnung von Reifendrucküberwachungseinheiten zu den einzelnen Radpositionen des Fahrzeugs nötig ist.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren wird ein relativ zum Fahrzeug bewegliches Gerät, beispielsweise ein Smartphone oder ein Funkschlüssel des Fahrzeugs, als zusätzlicher Empfänger verwendet. Das relativ zum Fahrzeug bewegliches Gerät kann dann selbst eine Auswertung oder Vorauswertung der Empfangspegel vornehmen, mit denen es Sendungen der Reifendrucküberwachungseinrichtungen empfangen hat, oder der Zentraleinheit einfach die Empfangspegel mitteilen, mit denen es Sendungen der Reifendrucküberwachungseinrichtungen empfangen hat. Auf diese Weise kann eine Zentraleinheit schneller eine zuverlässige Zuordnung der charakteristischen Kennungen der Reifendrucküberwachungseinheiten zu den einzelnen Radpositionen des Fahrzeugs vornehmen.

Ein Funkschlüssel oder ein Smartphone habe viele Fahrzeughalter ohnehin, so dass sich mit einem erfindungsgemäßen Verfahren ohne zusätzlichen Hardwareaufwand eine raschere Zuordnung von Reifendrucküberwachungseinheiten zu den Radpositionen eines Fahrzeugs vornehmen lässt.

Eine vorteilhafte Weiterbildung der Erfindung sieht vor, dass das Zuordnungsverfahren durch Entriegeln des Fahrzeugs gestartet wird und die Zentraleinheit dann die Reifendrucküberwachungseinheiten anweist, ihre Sendetätigkeit aufzunehmen. Auf diese Weise kann besonders frühzeitig eine Zuordnung der Reifendrucküberwachungseinheiten zu den Radpositionen des Fahrzeugs vorgenommen werden.

Eine weitere vorteilhafte Weiterbildung der Erfindung sieht vor, dass die Zentraleinheit mittels Bluetooth mit den Reifendrucküberwachungseinheiten kommuniziert, insbesondere nach dem Industriestandard Bluetooth low energy.

Eine weitere vorteilhafte Weiterbildung der Erfindung sieht vor, dass die Zentraleinheit an mehrere ortsfest am Fahrzeug angeordnete Empfänger angeschlossen ist. Je mehr Empfänger an die Zentraleinheit angeschlossenen sind, desto schneller lässt sich durch Auswertung der jeweils an den Empfängern auftretenden Empfangspegel ermitteln, wo die sendende Reifendrucküberwachungseinheit relativ zu den Empfängern angeordnet ist und somit einer Radposition zuordnen. Fahrzeuge, die mit elektronischen Verriegelungssystem ausgerüstet sind, weisen in der Regel mehrere Empfänger für die Signale von Funkschlüsseln auf. Diese Empfänger können vorteilhaft auch zum Empfang der Signale von Reifendrucküberwachungseinrichtungen verwendet werden.

Eine weitere vorteilhafte Weiterbildung der Erfindung sieht vor, dass die Zentraleinheit durch Auswertung des Empfangspegels von Sendungen des relativ zum Fahrzeug beweglichen Geräts dessen Position lokalisiert. Beispielsweis kann die Zentraleinheit auf diese Weise ermitteln, ob sich das Gerät noch relativ zum Fahrzeug bewegt oder nicht. Solange sich das Gerät relativ zum Fahrzeug bewegt, ist natürlich davon auszugehen, dass sich die Empfangspegel, mit denen Sendungen empfangen werden, ständig ändern, aber auch in diesem Fall enthalten die relativen Verhältnisse der Empfangspegel zueinander eine Information, die zur Zuordnung der Reifendrucküberwachungseinheiten zu den Radpositionen genutzt werden kann. Wenn beispielsweise der Benutzer des Fahrzeugs auf das Fahrzeug zugeht, ist zu erwarten, dass Sendungen von Reifendrucküberwachungseinheiten, die an Rädern an der Fahrzeugseite montiert sind, die dem Benutzer zugewandt ist, mit höheren Empfangspegeln empfangen werden als Sendungen von Reifendrucküberwachungseinheiten, die an Rädern an der Fahrzeugseite montiert sind, die von dem Benutzer abgewandt ist.

Generell gilt bei einem Fahrzeug mit vier Rädern, dass stets eines der Räder und damit eine der Reifendrucküberwachungseinrichtungen den geringsten Abstand zu dem relativ zum Fahrzeug beweglichen Gerät hat und das Gerät folglich Sendungen dieser Reifendrucküberwachungseinheit in der Regel mit dem höchsten Empfangspegel empfängt. Das diesem Rad diagonal gegenüberliegende Fahrzeugrad hat dann in der Regel den größten Abstand, so dass für dieses Rad der niedrigste Empfangspegel zu erwarten ist. Eine einfache Auswertung ergibt somit, dass die Reifendrucküberwachungseinheit mit dem höchsten Empfangspegel der Reifendrucküberwachungseinheit mit dem niedrigsten Empfangspegel diagonal gegenüber angeordnet ist. Eine Bewegung des Geräts relativ zu dem Fahrzeug kann rasch an einer Änderung der Empfangspegel erkannt werden

Wenn sich das relativ zum Fahrzeug beweglichen Gerät nicht mehr relativ zum Fahrzeug bewegt, etwa weil der Träger des Geräts im Fahrzeug Platz genommen hat, kann die Zentraleinheit durch Auswertung der Empfangspegel von Sendungen des Geräts dessen Position ermitteln, insbesondere, wenn die Zentraleinheit an mehrere ortsfest am Fahrzeug angeordnete Empfänger angeschlossen ist. Wenn die Position des relativ zu dem Fahrzeug beweglichen Geräts ermittelt ist, kann dieses Gerät wie ein weiterer an die Zentraleinheit angeschlossener Empfänger verwendet werden.

Eine weitere vorteilhafte Weiterbildung der Erfindung sieht vor, dass die Position des relativ zum Fahrzeug beweglichen Geräts sowie die Positionen der Zentraleinheit mittels GPS ermittelt werden. Auf diese Weise lässt sich die Position des Geräts relativ zu der Zentraleinheit des Fahrzeugs sehr rasch ermitteln, so dass dieses Gerät wie ein weiterer Empfänger an die Zentraleinheit angeschlossener Empfänger verwendet werden kann.

Eine weitere vorteilhafte Weiterbildung der Erfindung sieht vor, dass die Zentraleinheit bei der Zuordnung der Reifendrucküberwachungseinheiten zu den einzelnen Radpositionen des Fahrzeugs zusätzlich zu den Empfangspegeln von Sendungen auch die Sendleistung berücksichtigt, mit der die betreffende Sendung ausgesandt wurde. Wenn sowohl Sendeleistung als auch Empfangspegel bekannt sind, lässt sich daraus nämlich eine Information über den Abstand von Sender und Empfänger ermitteln, was die Zuordnung vereinfacht. Beispielsweise ist der Abstand zwischen Sender und Empfänger statistischen Mittel näherungsweise proportional zu √(p_{S}/p_{E}, wobei p_{S} die Sendeleistung und p_{E} der Empfangspegel ist. Wenn in die Auswertung der Empfangspegel auch die Sendeleistungen mit einbezogen werden, lässt sich somit eine Information über die Abstände der einzelnen Reifendrucküberwachungseinheiten zu dem Empfänger oder den Empfängern ermitteln, was Zuordnung der Reifendrucküberwachungseinheiten zu den einzelnen Radpositionen erleichtert.

Die Sendeleistung kann in einer Sendung, beispielsweise einem Datentelegramm, ausdrücklich angegeben werden. Möglich ist aber auch, dass die Zentraleinheit mit den Reifendrucküberwachungseinheiten kommuniziert und diesen jeweils vorgibt, mit welcher Sendeleistung gesendet werden soll. Wenn das relativ zum Fahrzeug beweglich Gerät eine Auswertung oder Vorauswertung der Empfangspegel vornimmt, kann es dabei auch die Sendeleistungen berücksichtigen, indem es diese den Datentelegrammen entnimmt oder einer gesendeten Vorgabe der Zentraleinheit.

Eine weitere vorteilhafte Weiterbildung der Erfindung sieht vor, dass die Reifendrucküberwachungseinheiten Sendungen mit unterschiedlichen Sendeleistungen aussenden, beispielsweise Sendeleistungen die sich um einen Faktor von 2 oder mehr unterscheiden. Auf diese Weise lässt sich noch genauer durch Auswertung von Sendeleistungen und Empfangspegeln ermitteln, wie groß der Abstand zwischen Sender und Empfänger ist, da der Empfangspegel eine nicht-lineare Funktion der Sendeleistung ist. In der Regel ist das Verhältnis zwischen Empfangspegel und Sendeleistung invers proportional zum Quadrat des Abstands zwischen Empfänger und Sender, wobei dieser Zusammenhang durch Abschattungs- und Reflexionseffekte beeinträchtigt werden kann.

Dabei ist möglich, dass die einzelnen Reifendrucküberwachungseinheiten selbsttätig ihre Sendeleistungen variieren und die jeweilige Sendeleistung in jeder Sendung angeben. In der Regel ist es aber effizienter, wenn die Zentraleinheit mit den Reifendrucküberwachungseinheiten kommuniziert und Reifendrucküberwachungseinheiten nach Empfang einer Sendung anweist, die Sendeleistung zu ändern, insbesondere wenn die Zentraleinheit jeweils vorgibt, mit welcher Sendeleistung eine Reifendrucküberwachungseinheit senden soll. Auf diese Weise kann die Zentraleinheit beispielsweise veranlassen, dass nur jene Reifendrucküberwachungseinheiten, die noch nicht einer Radposition zugeordnet sind, mit vorübergehend erhöhten Sendeleistungen senden, beispielsweise einem um einen Faktor 2 oder mehr, insbesondere einem Faktor 4 oder mehr erhöhten Sendeleistung senden. Sobald eine Reifendrucküberwachungseinheit einer Radposition zugeordnet ist, kann die Zentraleinheit dieser Reifendrucküberwachungseinheit eine minimale Sendeleistung vorgeben, die für einen zuverlässigen Empfang ausreicht.

Eine weitere vorteilhafte Weiterbildung der Erfindung sieht vor, dass die einzelnen Reifendrucküberwachungseinheiten als zusätzliche Empfänger genutzt werden. Indem die einzelnen Reifendrucküberwachungseinheiten der Zentraleinheit und dem relativ zu dem Fahrzeug beweglichen Gerät jeweils mitteilen, mit welchem Empfangspegel sie Sendungen anderer Reifendrucküberwachungseinheiten empfangen haben, kann die Zentraleinheit noch schneller eine Zuordnung vornehmen. Empfangspegel, mit denen die Reifendrucküberwachungseinheiten jeweils Sendungen anderer Reifendrucküberwachungseinheiten empfangen haben, enthalten nämlich, insbesondere in Kombination mit der jeweils dazugehörenden Sendleistung, eine Information über den Abstand der betreffenden Reifendrucküberwachungseinheiten voneinander.

Eine weitere vorteilhafte Weiterbildung der Erfindung sieht vor, dass die Zentraleinheit bei der Zuordnung charakteristischer Kennungen zu den Positionen, an denen jeweils ein Rad an dem Fahrzeug montiert ist, auch eine "Time-of-Flight" Auswertung vornimmt.

Eine "Time-of-Flight" Auswertung kann dabei im Rahmen einer bidirektionalen Kommunikation vorgenommen werden und als "Time-of-Flight" die Zeit erfasst werden, die vom Aussenden eines Signals der Zentraleinheit bis zum Empfang eins Antwortsignals der angesprochenen Reifendrucküberwachungseinheit vergeht. Eine andere Möglichkeit besteht darin, dass die Zeit vom Aussenden eines Signals bis zu seinem Empfang gemessen und als "Time-of-Flight" ausgewertet wird. Dazu wird eine Synchronisierung der Uhren von Reifendrucküberwachungseinheit und Zentraleinheit vorgenommen. Beispielsweise kann dann die Zentraleinheit der Reifendrucküberwachungseinheit genau vorschreiben, zu welchem Zeitpunkt eine Sendung begonnen werden soll, oder die Reifendrucküberwachungseinheit gibt in der Sendung, die genaue Zeit an, zu der mit dem Aussenden der Sendung begonnen wurde.

Durch eine "Time-of-Flight" Auswertung erhält die Zentraleinheit somit eine Information über den Abstand zwischen Reifendrucküberwachungseinheit und dem Empfänger bzw. den Empfängern der Zentraleinheit. Die Genauigkeit dieser Information lässt sich durch statistische Auswertung verbessern.

Eine weitere vorteilhafte Weiterbildung der Erfindung sieht vor, dass die Zentraleinheit bei der Zuordnung charakteristischer Kennungen zu den Positionen, an denen jeweils ein Rad an dem Fahrzeug montiert ist, auch eine "angle-of-arrival" Auswertung vornimmt. Bei einer "angle-of-arrival" Auswertung wird die Richtung eines eingehenden Signals ermittelt, indem eine Phasenverschiebung ausgewertet wird, die zwischen verschiedenen Antennen auftritt, welche dieselbe Sendung empfangen. Auf diese Weise lässt sich die Zuordnung von Reifendrucküberwachungseinrichtungen zu Radpositionen eines Fahrzeugs noch weiter beschleunigen.

## Patentansprüche

1. Verfahren zum Zuordnen von Reifendrucküberwachungseinheiten eines Reifendrucküberwachungssystems eines Fahrzeugs zu den verschiedenen Positionen, an denen jeweils ein Rad an dem Fahrzeug montiert ist, wobei
die Reifendrucküberwachungseinheiten jeweils einen Drucksensor, einen Empfänger und einen Sender enthalten,
der Sender aus Messungen des Drucksensors gewonnene Daten zusammen mit einer charakteristischen Kennung der Reifendrucküberwachungseinheit aussendet,
das Reifendrucküberwachungssystem eine Zentraleinheit enthält, die Sendungen der Reifendrucküberwachungseinheiten empfängt und durch Auswertung von Empfangspegeln die charakteristischen Kennungen der verschiedenen Reifendrucküberwachungseinheiten jeweils einer der Positionen zuordnet, an denen jeweils ein Rad an dem Fahrzeug montiert ist,
**dadurch gekennzeichnet, dass**
die Sendungen der Reifendrucküberwachungseinheiten zusätzlich auch von einem relativ zum Fahrzeug beweglichen Gerät, vorzugsweise einem Funkschlüssel oder einem Smartphone, empfangen werden,
das relativ zum Fahrzeug bewegliche Gerät die Empfangspegel, mit denen die charakteristischen Kennungen von Reifendrucküberwachungseinheiten empfangen wurden, oder durch Auswertung der Empfangspegel gewonnene Daten an die Zentraleinheit übermittelt, und
die Zentraleinheit zu der Zuordnung der charakteristischen Kennung der verschiedenen Reifendrucküberwachungseinheiten auch von dem relativ zum Fahrzeug bewegliche Gerät erhaltene Informationen auswertet.

2. Verfahren nach Anspruch 1, **dadurch gekennzeichnet, dass** die Zentraleinheit bei der Auswertung von Empfangspegeln zusätzlich auch die Sendeleistung berücksichtigt, mit der die empfangenen Sendungen ausgesandt wurden.

3. Verfahren nach einem der vorstehenden Ansprüche, **dadurch gekennzeichnet, dass** die Zentraleinheit mit den Reifendrucküberwachungseinheiten kommuniziert und die Sendeleistung der Reifendrucküberwachungseinheiten jeweils vorgibt.

4. Verfahren nach einem der vorstehenden Ansprüche, **dadurch gekennzeichnet, dass** die Zentraleinheit durch Auswertung des Empfangspegels von Sendungen des relativ zum Fahrzeug beweglichen Geräts dessen Position lokalisiert.

5. Verfahren nach einem der vorstehenden Ansprüche, **dadurch gekennzeichnet, dass** die Zentraleinheit an mehrere ortsfest am Fahrzeug angeordnete Empfänger angeschlossen ist, vorzugsweise Empfänger zum Empfangen von Signalen eines Funkschlüssels.

6. Verfahren nach einem der vorstehenden Ansprüche, **dadurch gekennzeichnet, dass** die Position des relativ zum Fahrzeug beweglichen Geräts sowie die Positionen der Zentraleinheit mittels GPS ermittelt werden.

7. Verfahren nach einem der vorstehenden Ansprüche, **dadurch gekennzeichnet, dass** die Zentraleinheit bei der Zuordnung charakteristischer Kennungen zu den Positionen, in denen jeweils ein Rad an dem Fahrzeug montiert ist, auch eine "Time of Flight" Auswertung vornimmt.

8. Verfahren nach einem der vorstehenden Ansprüche, **dadurch gekennzeichnet, dass** die Zentraleinheit bei der Zuordnung charakteristischer Kennungen zu den Positionen, an denen jeweils ein Rad an dem Fahrzeug montiert ist, auch eine "Angle of Arrival" Auswertung vornimmt.

9. Verfahren nach einem der vorstehenden Ansprüche, **dadurch gekennzeichnet, dass** die Reifendrucküberwachungseinheiten Daten nach dem Industriestandart Bluetooth aussenden.

10. Verfahren nach einem der vorstehenden Ansprüche, **dadurch gekennzeichnet, dass** das relativ zum Fahrzeug bewegliche Gerät eine Vorauswertung oder eine eigene Auswertung der Empfangspegel zur Zuordnung charakteristischer Kennungen der verschiedenen Reifendrucküberwachungseinheiten zu einer Radposition vornimmt und das Ergebnis an die Zentraleinheit übermittelt.

11. Verfahren nach einem der vorstehenden Ansprüche, **dadurch gekennzeichnet, dass** das Verfahren durch Entriegeln des Fahrzeugs gestartet wird und die Zentraleinheit dann die Reifendrucküberwachungseinheiten anweist, ihre Sendetätigkeit aufzunehmen.

## Claims

1. A method of allocating tyre pressure monitoring units of a tyre pressure monitoring system of a vehicle to the various positions at which a respective wheel is mounted on the vehicle, wherein
the tyre pressure monitoring units each contain a pressure sensor, a receiver and a transmitter,
the transmitter sends data obtained from measurements of the pressure sensor together with a characteristic identifier of the tyre pressure monitoring unit,
the tyre pressure monitoring system contains a central unit which receives transmissions from the tyre pressure monitoring units and, by evaluating reception levels, assigns the characteristic identifiers of the various tyre pressure monitoring units to one of the positions at which a respective wheel is mounted on the vehicle, **characterised in that** the transmissions from the tyre pressure monitoring units are also received by a device which is movable relative to the vehicle, preferably a radio key or a smartphone,
the device, which is movable relative to the vehicle, transmits the reception levels with which the characteristic identifiers of tyre pressure monitoring units have been received or data obtained by evaluating the reception levels to the central unit, and
the central unit also evaluates information received from the device moving relative to the vehicle in order to assign the characteristic identifier of the various tyre pressure monitoring units.

2. Method according to claim 1, **characterised in that** the central unit additionally takes into account the transmission power with which the received transmissions were transmitted when evaluating reception levels.

3. Method according to one of the preceding claims, **characterised in that** the central unit communicates with the tyre pressure monitoring units and specifies the transmission power of the tyre pressure monitoring units in each case.

4. Method according to one of the preceding claims, **characterised in that** the central unit locates the position of the device moving relative to the vehicle by evaluating the reception level of transmissions from the device.

5. Method according to one of the preceding claims, **characterised in that** the central unit is connected to a plurality of receivers arranged in a fixed position on the vehicle, preferably receivers for receiving signals from a radio key.

6. Method according to one of the preceding claims, **characterised in that** the position of the device movable relative to the vehicle and the positions of the central unit are determined by means of GPS.

7. Method according to one of the preceding claims, **characterised in that** the central unit also carries out a "time of flight" evaluation when assigning characteristic identifiers to the positions in which a wheel is mounted on the vehicle in each case.

8. Method according to one of the preceding claims, **characterised in that** the central unit also carries out an "angle of arrival" evaluation when assigning characteristic identifiers to the positions at which a respective wheel is mounted on the vehicle.

9. Method according to one of the preceding claims, **characterised in that** the tyre pressure monitoring units transmit data according to the Bluetooth industry standard.

10. Method according to one of the preceding claims, **characterised in that** the device, which is movable relative to the vehicle, carries out a preliminary evaluation or its own evaluation of the received levels in order to assign characteristic identifiers of the various tyre pressure monitoring units to a wheel position and transmits the result to the central unit.

11. Method according to one of the preceding claims, **characterised in that** the method is started by unlocking the vehicle and the central unit then instructs the tyre pressure monitoring units to commence their monitoring activity.

## Revendications

1. Procédé d'attribution d'unités de surveillance de pression de pneu d'un système de surveillance de pression de pneu d'un véhicule aux différentes positions auxquelles une roue respective est montée sur le véhicule, dans laquelle
les unités de surveillance de pression de pneu contiennent chacune un capteur de pression, un récepteur et un émetteur,
l'émetteur émet des données obtenues à partir des mesures du capteur de pression ainsi qu'un identificateur caractéristique de l'unité de surveillance de pression de pneu,
le système de surveillance de pression de pneu contient une unité centrale qui reçoit les émissions des unités de surveillance de pression de pneu et, en évaluant les niveaux de réception, attribue les identificateurs caractéristiques des différentes unités de surveillance de pression de pneu dans chaque cas à l'une des positions auxquelles une roue respective est montée sur le véhicule,
**caractérisé en ce que**
les émissions des unités de surveillance de pression de pneu sont également reçues par un dispositif mobile par rapport au véhicule, de préférence une clé à télécommande ou un smartphone,
le dispositif mobile par rapport au véhicule transmet à l'unité centrale les niveaux de réception avec lesquels les identificateurs caractéristiques des unités de surveillance de pression de pneu ont été reçus ou les données obtenues en évaluant les niveaux de réception, et
l'unité centrale évalue également les informations reçues du dispositif mobile par rapport au véhicule afin d'attribuer l'identificateur caractéristique des différentes unités de surveillance de pression de pneu.

2. Procédé selon la revendication 1, **caractérisé en ce que** l'unité centrale prend également en compte la puissance d'émission avec laquelle les émissions reçues ont été émises lors de l'évaluation des niveaux de réception.

3. Procédé selon l'une des revendications précédentes, **caractérisé en ce que** l'unité centrale communique avec les unités de surveillance de pression de pneu et spécifie la puissance d'émission des unités de surveillance de pression de pneu dans chaque cas.

4. Procédé selon l'une des revendications précédentes, **caractérisé en ce que** l'unité centrale localise la position du dispositif mobile par rapport au véhicule en évaluant le niveau de réception des émissions du dispositif.

5. Procédé selon l'une des revendications précédentes, **caractérisé en ce que** l'unité centrale est connectée à une pluralité de récepteurs disposés de manière fixe sur le véhicule, de préférence des récepteurs pour la réception de signaux provenant d'une clé à télécommande.

6. Procédé selon l'une des revendications précédentes, **caractérisé en ce que** la position du dispositif mobile par rapport au véhicule et les positions de l'unité centrale sont déterminées au moyen d'un GPS.

7. Procédé selon l'une des revendications précédentes, **caractérisé en ce que** l'unité centrale effectue également une évaluation de "temps de vol" lors de l'attribution d'identificateurs caractéristiques aux positions dans lesquelles une roue respective est montée sur le véhicule.

8. Procédé selon l'une des revendications précédentes, **caractérisé en ce que** l'unité centrale effectue également une évaluation de "angle d'arrivée" lors de l'attribution d'identificateurs caractéristiques aux positions dans lesquelles une roue respective est montée sur le véhicule.

9. Procédé selon l'une des revendications précédentes, **caractérisé en ce que** les unités de surveillance de pression de pneu émettent les données conformément à la norme industrielle Bluetooth.

10. Procédé selon l'une des revendications précédentes, **caractérisé en ce que** le dispositif mobile par rapport au véhicule effectue une évaluation préliminaire ou sa propre évaluation des niveaux reçus afin d'attribuer les identificateurs caractéristiques des différentes unités de surveillance de pression de pneu à une position de roue et transmet le résultat à l'unité centrale.

11. Procédé selon l'une des revendications précédentes, **caractérisée en ce que** le procédé commence par le déverrouillage du véhicule et que l'unité centrale ordonne alors aux unités de surveillance de pression de pneu de commencer leur activité de surveillance.
